# EUROPEAN PATENT APPLICATION

(11) **EP 4 679 134 A1**
(43) Date of publication of application: **14.01.2026**
(21) Application number: 25183452.9
(22) Date of filing: 17.06.2025
(51) Int. Cl.: G01S 7/481, G01S 17/89

(54) **PROCESSING OF DATA FROM EVENT-BASED SENSORS**

(30) Priority: 09.07.2024 SE 2450785
(71) Applicant: Terranet Tech AB, 223 62 Lund (SE)
(72) Inventor: WIMAN, Joshua, 22464 Lund (SE)
(74) Representative: Neij & Lindberg AB

(57) **Abstract**

A stream of events from an event-based sensor (30, 40, 50) is processed (60) for trajectory determination. Each event comprises a pixel position in a pixel array (31, 41, 51) of the event-based sensor, and a time stamp, where the events originate from one or more light beams (21) scanned across a scene that is viewed by the sensor and includes an object (1). A grid of cells is defined for the pixel array, with each cell comprising a plurality of pixels. In the trajectory determination, incoming events are mapped to the grid of cells during a first time period, and summary data with a representative position for the pixel positions that fall within the respective cell during a first time period is generated. An intra-cell evaluation of the summary data generated for a second time period is performed to generate a cell trajectory of representative positions within the respective cell. An inter-cell evaluation of a plurality of cell trajectories generated for a plurality of cells for the second time period is performed to generate a grid trajectory. Accordingly, smaller trajectories are merged into larger trajectories by defining a computational partitioning of the pixels on the event-based sensor into a grid of cells and by performing a data reduction processing. Trajectory determination is facilitated when plural scanning beams are simultaneously moved within the scene that is viewed by the event-based sensor, provided that the scanning beams are separated in space at all times

## Description

### Technical Field

The present disclosure relates to data processing in relation to imaging systems, in particular imaging systems that comprise an event-based sensor arranged to receive photons reflected or scattered by a region on an object when illuminated by a scanning light beam.

### Background

Image sensors in conventional digital cameras capture two-dimensional (2D) digital images that represent the incident photons on individual pixels of a 2D pixel array within an exposure time period. The number of pixels in the pixel array may be large, resulting in a high computational load for processing of the digital images.

Three-dimensional (3D) image-based positioning conventionally uses a plurality of digital cameras, which are arranged to view a scene from different angles. The digital cameras are operated in synchronization to capture a respective time sequence of digital images. A time sequence of 3D representations of any object located in the scene is generated by processing concurrent digital images from different digital cameras by triangulation. This image-by-image processing is processing intensive and difficult to perform in real time, at least if computational resources are limited.

To mitigate these problems, US10261183 proposes a different type of system for 3D positioning. The system includes a transmitter configured to scan a light beam across the scene, and a plurality of digital cameras arranged to view the scene from different angles. As the light beam hits a voxel on an object in the scene, photons are reflected or scattered off the object. Some of these photons impinge on the pixel array of the respective digital camera and produce a local signal increase. Based on the location of the local signal increase on each pixel array, a 3D position of the illuminated voxel may be determined by triangulation. As the light beam scans the object, the resulting 3D positions may be compiled into a 3D representation of the object. This technique significantly reduces the amount of image data that needs to be processed for 3D positioning, in particular if the digital cameras are so-called event cameras. In an event camera, each pixel operates independently and asynchronously to report a change in brightness as it occurs, and staying silent otherwise. Each activation of a pixel forms an event. The event camera outputs a continuous stream of such events, where each event may be represented by an identifier of the activated pixel and a timestamp of its activation.

Even if the use of event cameras will reduce the amount of data to be processed for 3D positioning compared to processing of 2D images, there is continued need to improve processing efficiency, for example if the 3D positioning is to be executed on resource constrained systems and/or if the 3D positioning is time-constrained. The events from an event sensor defines a point cloud that moves over time as one or more light beams are scanned in the space that is viewed by the event camera. The moving point cloud may be processed into one or more trajectories, to facilitate further analysis. However, trajectory estimation is difficult to implement in a processing-efficient way, since it involves identifying connections between points is space and time. The number of processing operations may thus scale dramatically with the number of data points in the point cloud and the time resolution of the point cloud movement.

The above-identified problem is equally applicable if the event data is to be processed for determination of another object property than the 3D position of the object, for example a surface structure, a size, a contour, etc.

### Summary

It is an objective to at least partly overcome one or more limitations of the prior art.

It is also an objective to provide an efficient technique of processing event data from an event-based sensor in a scanning illumination system into one or more trajectories.

One or more of these objectives, as well as further objectives that may appear from the description below, are at least partly achieved by a computer-implemented method of processing a data stream of events from an event-based sensor, a computer-readable medium, and a system according to the independent claims, embodiments thereof being defined by the dependent claims.

Aspects of the present disclosure enable efficient trajectory determination based on a stream of events from an event-based sensor. The aspects are based on an insight that it is beneficial to reduce the amount of data early in the processing and to determine the trajectories in step-wise fashion, starting with smaller trajectories which are then merged into larger trajectories. This is achieved by defining a computational partitioning of the pixels on the event-based sensor into a grid of cells and by performing a data reduction processing of the events that fall within the respective cell into summary data that is relevant for the trajectory determination, including a representative position for the events. The data reduction processing can be done fast and efficiently for the incoming stream of events and will greatly facilitate downstream processing into trajectories by limiting the amount data. The data reduction processing may also reduce the impact of noise and other disturbances represented in the stream of events. Further, the locality of position data in the stream of events is inherently preserved in the resulting summary data through the spatial partitioning into cells and the mapping of events to cells. The preserved locality is a precondition for the downstream processing of the summary data into trajectory data.

The subsequent processing for trajectory determination is partitioned into an intra-cell evaluation for generating cell trajectories based on the representative positions from the data reduction processing, and an inter-cell evaluation for generating grid trajectories based on the cell trajectories. By the inter-cell evaluation, the potentially complex task of determining trajectories is confined to individual, spatially confined sub-areas on the sensor. This significantly reduces the complexity of determining trajectories. Given the intra-cell evaluation, the inter-cell evaluation is rendered deterministic and processing efficient, since it involves processing of a limited number of cell trajectories for formation of grid trajectories. Generally, aspects of the present disclosure serves to limit the number of comparisons that are required to process a moving point cloud, represented by the stream of events, into trajectories.

Further, the intra-cell evaluation is inherently compatible with parallel processing, since the summary data for different cells can be evaluated in parallel.

Aspects of the present disclosure also provide the technical advantage of facilitating trajectory determination when plural scanning beams are simultaneously moved within the scene that is viewed by the event-based sensor. Provided that the scanning beams are separated in space at all times, the grid of cells may be defined so that, at any time, the pixels within any cell in the grid only receives light that is scattered or reflected by one of the scanning beams. Thereby, cell trajectories will inherently be determined separately for individual scanning beams and without prior knowledge about the number of scanning beams.

Still other objectives and aspects, as well as features, embodiments and technical effects will appear from the following detailed description, the attached claims, and the drawings.

### Brief Description of Drawings

FIG. 1A is a block diagram of a system for determining a property of an object by use of a scanning illumination system and event-based sensors, and FIG. 1B is a block diagram of an example stream of events generated by an event-based sensor.
FIG. 2 is a flow chart of an example method performed in the system of FIG. 1A.
FIG. 3 is a timing diagram for a sequence of light pulses generated by an illumination system.
FIG. 4A is a plan view of a pixel array logically partitioned into a grid of cells, and FIG. 4B is a plan view of a grid of cells with overlaid trajectories of incoming light originating from two scanning light beams.
FIGS 5A-5E are flow charts of methods and procedures for processing a stream of events from an event-based sensor in accordance with examples.
FIG. 6A shows activated pixels in a cell for three consecutive summary periods, and FIG. 6B depicts summary data generated in FIG. 6A in accordance with an example.
FIG. 7 is a plan view of representative positions in summary data determined for a cell.
FIG. 8A illustrates an example procedure for splicing cell trajectories between two neighboring cells into a grid trajectory, FIG. 8B illustrates a procedure for splicing cell trajectories into grid trajectories, FIG. 8C shows the effect of an adjustment of starting and end points of cell trajectories at a border between the neighboring cells in FIG. 8B, FIG. 8D shows a time sequence of light pulses at an edge of an object, and FIG. 8E shows a set of activated pixels on a pixel array when a light pulse hits the edge of the object in FIG. 8D.
FIG. 9 illustrates a procedure for splicing grid trajectories generated for consecutive frames.
FIG. 10 is a block diagram of a machine that may implement methods disclosed herein.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the terms "multiple", "plural" and "plurality" are intended to imply provision of two or more elements, whereas the term "set" is intended imply provision of at least one element. The term "and/or" includes any and all combinations of one or more of the associated listed elements.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

As used herein, "event-based sensor" or "event sensor" refers to a sensor that responds to local changes in brightness. The sensor comprises light-sensitive elements ("pixels") that operate independently and asynchronously, by reporting changes in brightness as they occur, and staying silent otherwise. Thus, an event sensor outputs an asynchronous stream of events triggered by changes in scene illumination. The pixels may be arranged in an array that defines a light-sensitive surface. The light-sensitive surface may be one-dimensional (1D) or two-dimensional (2D). The pixels may be based on any suitable technology, including but not limited to active pixel sensor (APS), charge-coupled device (CCD), single photon avalanche detector (SPAD), complementary metal-oxide-semiconductor (CMOS), silicon photomultiplier (SiPM), photovoltaic cell, phototransistor, etc.

As used herein, "beam scanner" refers to a device capable of scanning or sweeping a beam of light in a one, two or three-dimensional pattern. The beam of light may or may not be collimated. The beam scanner comprises a scanning arrangement configured to steer the beam of light. The scanning arrangement may be based on any suitable technology and may comprise one or more mirrors, prisms, optical lenses, acousto-optic deflectors, electro-optic deflectors, etc. In a further alternative, the scanning arrangement may achieve scanning through phase arrays. The beam scanner may further comprise a light source, such as a laser, light emitting diode (LED), light bulb, etc. The light source may provide a continuous or pulsed light beam of a predefined frequency or range of frequencies.

As used herein, "light" refers to electromagnetic radiation within the portion of the electromagnetic spectrum that extends from approx. 10 nm to approx. 14 µm, comprising ultraviolet radiation, visible radiation, and infrared radiation.

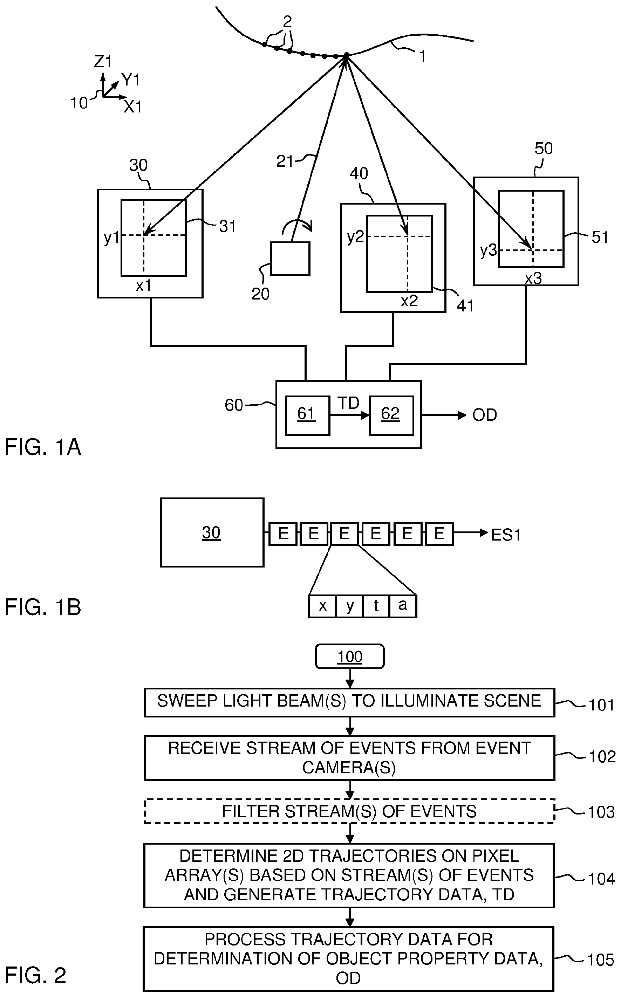

Embodiments relate to a processing-efficient and fast technique of processing a data stream of events generated by an event-based sensor, denoted "event sensor" or "event camera" in the following, where the events originate from one or more light beams scanned across a scene that is viewed by the event sensor. Specifically, the technique aims at generating trajectory data, in which the events are arranged into one or more trajectories. Each such trajectory represents how a light beam moves across an object in the scene. For context, the generation of trajectory data will be described with reference to an arrangement or system for object property detection shown in FIG. 1A.

FIG. 1A is a schematic view of a system comprising three event cameras 30, 40, 50 and a beam scanner 20. Each event camera 30, 40, 50 comprises a respective sensor array or pixel array 31, 41, 51 that defines a two-dimensional (2D) array of light-sensitive elements ("pixels"). The event cameras 30, 40, 50 have a respective field of view (FOV) facing a scene. The FOVs overlap at least partly. Although not shown in FIG. 1A, each event camera 30, 40, 50 may comprise one or more optical components that define the FOV, such as optical lenses. The event cameras may also include optical filters.

The beam scanner 20 is configured to scan or sweep a beam of light 21 ("scanning beam") across the scene in a predefined, random or pseudo-random pattern. The movement path of the scanning beam 21 may be specific to the beam scanner 20 or may be configurable and thus adjustable. For example, the beam scanner 20 may be operable to independently sweep the light beam 21 along two orthogonal axes. It is also conceivable for the sweeps along the two axes to be dependent on one another. The period of a sweep back and forth ("sweep period", corresponding to a "sweep frequency") may differ between the axes. In one non-limiting example, the sweep frequency along a horizontal axis may be in the range of 100-300 Hz, and the sweep frequency along a vertical axis may be in the range of 5-20 Hz. In some embodiments, the sweep speed along the respective axis varies as a sinusoid. Other functional dependencies of the sweep speed is conceivable, for example a triangle function, or a more square-like function. In some embodiments, the scanning beam 21 forms a Lissajous curve.

In the illustrated example, the scene includes an object 1, which is illuminated by the scanning beam 21, which forms a moving spot of light on the object 1. The moving spot thereby sequentially illuminates regions 2 on the object 1. These regions 2, indicated as dark spots in FIG. 1A, are also denoted "scatter areas" herein, abbreviated SA. A scatter area 2 thus refers to a sampled surface element of an object. For each SA 2, one or more of the cameras (for example, two or three) detect photons reflected or otherwise scattered by that SA. In the illustrated example, reflected light from an SA is detected by one or more pixels at location (x1,y1) on sensor array 31, at location (x2,y2) on sensor array 41, and at location (x3,y3) on sensor array 51. Typically, in an event camera, an event is only generated when a pixel is "activated" by receiving light energy in excess of a predefined limit. As understood from FIG. 1A, reflected light from SAs 2 is captured or detected by one or more of the cameras 30, 40, 50, which output a respective stream of events comprising identifiers or addresses of the activated pixels. In some embodiments, each camera autonomously and asynchronously outputs an event whenever a pixel is detected to be illuminated by a sufficient number of photons.

FIG. 1B schematically illustrates a stream of events ("event stream") that may be output by an event camera 30. The event stream is designated by ES1, and each event is designated by E. In the examples presented herein, it is assumed that each event E comprises a pixel position on the pixel array (represented by sensor coordinates x, y in FIG. 1B) and a time stamp of the activated pixel (represented by t in FIG. 1B). The pixel position is generally given as an index or address of the activated pixel, for example sensor coordinates (as shown). The time stamp designates the time point of activation of the pixel and is set based on the output of a clock in the event camera. The time stamp may be given in any time unit. As indicated in FIG. 1B, the events E may include further data a, for example the level of illumination ("light intensity") received by the activated pixel.

The cameras 30, 40, 50 are connected, by wire or wirelessly, to a processing system 60, such as a computer device, which is configured to receive the event streams from the cameras. Conceptually, the processing system 60 may be seen to include a first module or sub-system 61, which is configured to generate trajectory data, TD, from the event streams, and a second module or sub-system 62, which is configured to receive TD and determine object property data, OD, based on TD. The trajectory data, TD, represents 2D trajectories of activated pixels on the pixel array, where each 2D trajectory corresponds to movement of a scanning beam across an object in the scene. In other words, a 2D trajectory corresponds to a movement track of SAs 2 as viewed by the event camera.

The processing system 60 may comprise one first module 61 for each event camera 30, 40, 50. Alternatively, the first module 61 may be configured to jointly process the events from two or more event cameras.

The second module 62 may be configured in many different ways, depending on the object properties to be determined. The structure of the second module 62 goes beyond the present disclosure and will not be described in any detail. In a non-limiting example, the second module 62 is configured to computationally combine trajectory data from two or more event cameras into 3D trajectories in three-dimensional (3D) space, for example in a scene coordinate system associated with the system (cf. 10 in FIG. 1A). The second module 62 may, for example, be configured to compute the 3D trajectories by any well-known and conventional triangulation technique, based on calibration data that represents the relative positioning of the event cameras. Optionally, the second module 62 may be configured to further process the 3D trajectories to determine refined data, for example a contour of an object, a surface structure of an object, a 3D shape of an object, an orientation of an object, a movement speed of an object, a movement direction of an object, etc. Still further, the second module 62 may include a perception system configured to classify the object into one or more predefined object classes. Such a perception system may use artificial intelligence and comprise one or more trained neural networks. The object property data, OD, may include any one of the 3D trajectories, the refined data for the respective object, or the classification of the respective object.

It is also conceivable that the second module 62 operates without computing 3D trajectories. For example, the second module 62 may be configured to determine whether an object is present in the scene, which is also an object property. In its simplest form this may be achieved by analyzing the trajectory data for one or more event cameras for detection of 2D trajectories that are indicative of an object, for example by having a predefined extent in one, two or three dimensions.

The system in FIG. 1A may be stationary or moving. In some embodiments, the system is installed on a moving terrestrial, air-based or waterborne vehicle, and the resulting 3D trajectories are processed to observe a complex dynamic 3D scene lit up by the scanning beam(s). For example, such a 3D scene may be mapped in detail at high detection speed based on the 3D trajectories. For example, this type of information may be useful to systems for autonomous driving and driver assistance.

The system in FIG. 1A is merely given as a non-limiting example. A larger number of event cameras may be used, for example to increase accuracy and/or introduce redundancy. Alternatively, a smaller number of event cameras may be used, for example to increase computation speed and/or reduce cost and complexity. Likewise, any number of beam scanners 20 may be used. Thus, more than one light beam 21 may be swept across the scene. It is also conceivable that a beam scanner 20 is configured to sweep more than one light beam across the scene. In some embodiments, the light beams are formed by laser light, which is thus coherent and highly collimated. Such plural light beams, whether generated by one beam scanner or different beam scanners, may be generated so the spatial separation of the light beams, at a predefined distance from the beam scanner(s) and at all times, exceeds the nominal size of the human eye. This allows for maximizing the energy of the respective light beam in view of eye safety requirements for laser light.

FIG. 2 is a flow chart of an example method 100, which may be performed by the system in FIG. 1. In step 101, at least one beam scanner 20 is operated to scan one or more light beams 21 within a scene. Step 101 may be performed continuously during operation of the method 100. In step 102, which may or may not be performed in real-time, the processing system 60 receives an event stream from the respective event camera 30, 40, 50.

The skilled person understands that the sensor arrays 31, 41, 51 may also receive and detect light that does not originate from the scanning beam(s) 21, for example ambient light that is reflected on the object 1. The ambient light may originate from sunlight or lighting at the scene. Further, the sensor arrays 31, 41, 51 may receive and detect light that originates from secondary reflections of the scanning beam. Further, electronic noise on the sensor array may also result in erroneously activated pixels. Therefore, the method 100 may include an optional step 103 in which the processing device 60 operates a filtration procedure on the respective stream of events to remove events that are likely to originate from stray light or noise while retaining other events. Step 103 results in a filtered event stream for the respective event stream. The filtration procedure may be performed in many different ways. A processing-efficient filtration technique is disclosed in WO2023/046392, which is incorporated herein by reference.

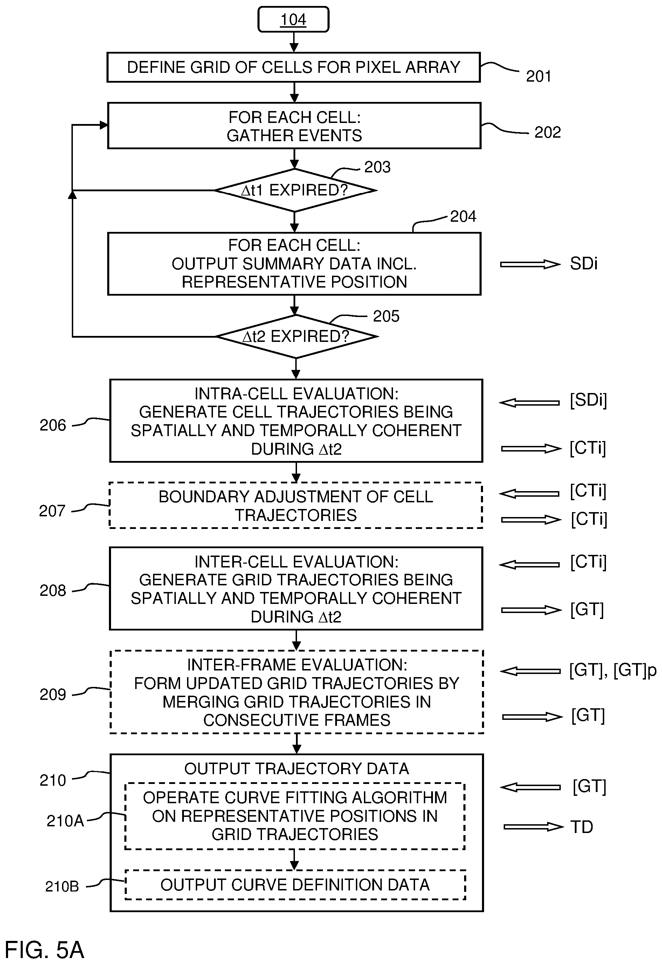

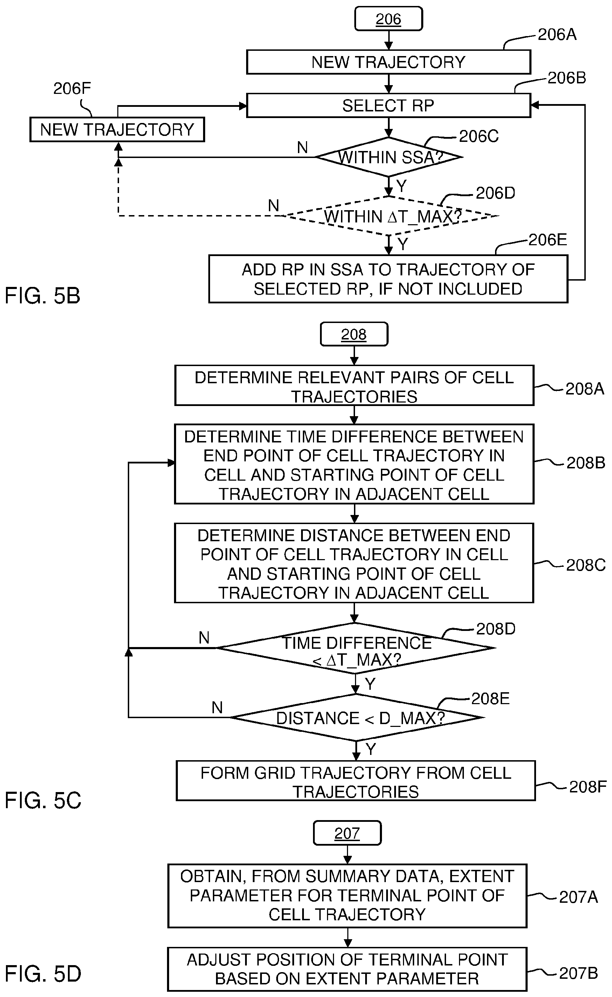

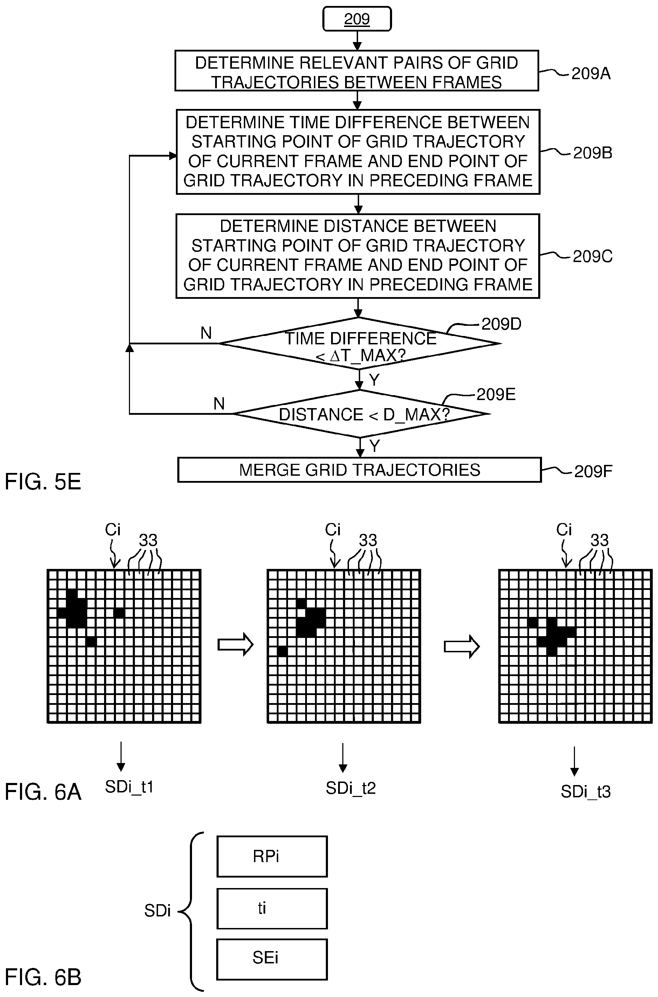

In step 104, the processing device 60 generates the above-mentioned trajectory data, TD. Step 104 may be performed by the first module 61 in FIG. 1A. Step 104 involves a trajectory determination procedure, in which 2D trajectories on the respective pixel array are determined based on the (filtered) event stream from the respective event camera. As used herein, a 2D trajectory is a sequence of temporally and spatially coherent positions in the coordinate system of the pixel array. In many applications, real-time or near real-time performance of the processing by the method 100 may be required or at least desirable. Here, step 104 may be particularly challenging. Embodiments of the present disclosure serve to minimize the latency introduced by the trajectory determination procedure of step 104. Embodiments may also serve to render step 104 efficient, both in terms of memory requirement and processing load, to reduce the cost of the hardware for implementing the trajectory determination, and to limit power consumption. Various embodiments of step 104 are described in detail below with reference to FIGS 5-9.

In step 105, the processing device 60 processes the trajectory data, TD, from step 104 for determination of one or more properties of one or more objects in the scene. The result is provided in the form of the above-mentioned object property data, OD. Thus, step 105 may be performed by the second module 62, for example in accordance with any of the non-limiting examples given hereinabove.

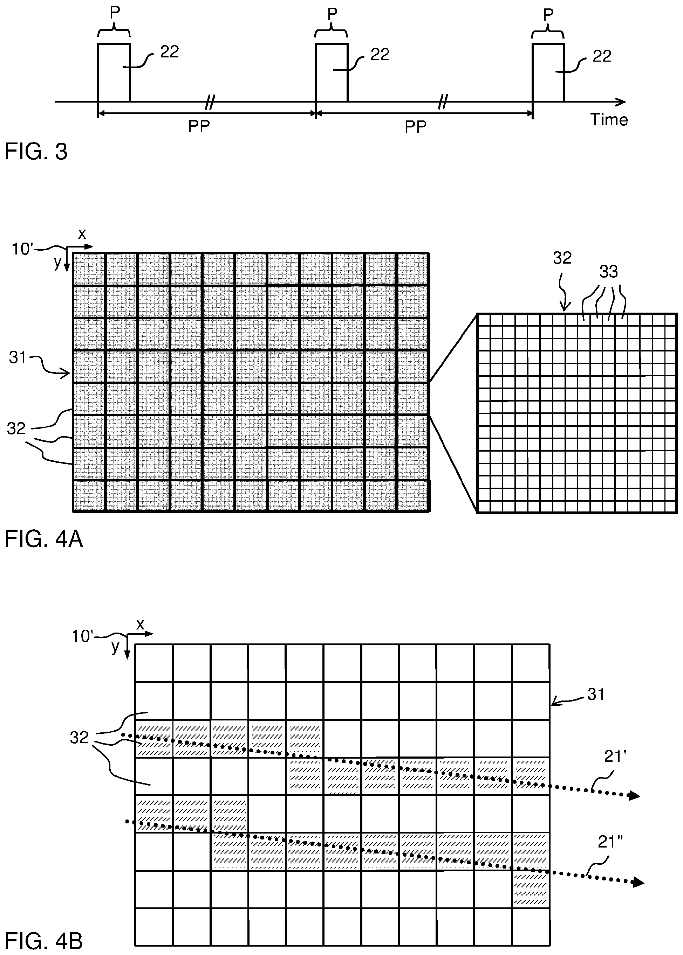

At least some embodiments of step 104 rely on the presence of light pulses in the scanning beam 21. FIG. 3 is a timing diagram of light pulses 22 generated by a beam scanner. Each light pulse 22 has a duration P, and the light pulses 22 are generated periodically at a pulse-to-pulse interval PP. The interval PP is typically much longer than the pulse duration P. In some embodiments, the duration P of the respective light pulse is in the range of 1-100 ns. In some embodiments, the interval PP is in the range of 1-20 µs, corresponding to a pulse rate in the range of 20-1,000 kHz. The pulsed light may be generated by a laser source in the beam scanner 20. The laser source may include one or more solid-state laser devices, such as a laser diode, a VCSEL (vertical cavity surface-emitting laser), a DPSSL (diode-pumped solid-state laser), a silicon laser, etc. In some embodiments, the laser source is configured to emit IR light, for example in the range of 700-1000 nm.

FIG. 4A is a top plan view of an example pixel array 31 comprising a grid of pixels 33. Each pixel 33 is responsive to incident photons. Each pixel has a known location ("pixel position") in a local coordinate system 10' and is represented by a unique identifier, index or address, here given as a pair of coordinates (x,y) in the local coordinate system 10'. In some embodiments, each pixel 32 stores a reference brightness level, and continuously compares it to the current level of brightness detected by the pixel. If the difference in brightness exceeds a preset threshold, the pixel 32 resets its reference level and generates an event. Events may also contain the polarity (increase or decrease) of a brightness change and/or an instantaneous measurement of the current level of illumination ("intensity"). The operation and structure of event cameras goes beyond the scope of the present disclosure. For a detailed description of different types of event cameras and their operation, reference is made to the article "Event-based Vision: A Survey", by Gallego et al., published as arXiv:1904.08405v3 [cs.CV], 8 Aug 2020, which is incorporated herein in its entirety by reference.

FIG. 4A also illustrates a grid of cells 32, which is defined for the pixel array 31 and which is used in the computations of step 104. Each cell 32 comprises a plurality of pixels 33 and has a predefined location on the pixel array 31. The cells 32 are not physically defined on the pixel array 31 but is a computational construct or partitioning which is used in the computations of step 104. During the computations, each cell 32 may be assigned an identifier that uniquely identifies the cell 32 and its included pixels 33.

In the example of FIG. 4A, the cells 32 are arranged in a rectilinear grid which forms a tessellation or tiling of the cells 32 on the pixel array 31. Thus, the cells 32 are arranged with no overlap and no gaps. For computational efficiency, the cells 32 may have equal shape and size, as shown, and may be rectangular, for example square as shown. However, it is conceivable for the cells to differ in shape and/or size, and to be arranged in another form of regular grid, or even in an irregular grid, with or without overlap.

The pixels 32 are activated by reflected light that is received by the pixel array 31 as the scanning beam 21 (FIG. 1A) is swept across the scene. In FIG. 4B, the path of reflected light from the scanning beam 21 is superimposed on the array 31 as a dotted arrow 21'. Hatched areas indicate the cells 32 that contain pixels that are activated as the scanning beam is swept across an object in the scene. Each dot in the arrow 21' may be seen to represent reflected light from an individual light pulse (cf. 22 in FIG. 3). The reflected light of a light pulse ("reflection pulse") has a pulse size on the pixel array 31, which depends on the spot size of the light spot 2 on the object 1 (FIG. 1A). Thus, the pulse size on the pixel array 31 may differ depending on the distance to the object, if the scanning beam 21 is divergent. The pulse size may also differ depending on the surface structure and orientation of the object 1. However, for each system, a nominal pulse size of the reflection pulse on the pixel array 31 can be defined, for example for a maximum useful distance between the system and the object 1. The nominal pulse size typically corresponds to plural pixels on the pixel array 31. For computational efficiency, the size of the respective cell 32 may be defined to exceed the nominal pulse size of the reflection pulse. In some embodiments, each cell 32 may have a size to accommodate at least 2-5 reflection pulses arranged side by side. Based on FIG. 4B, it is realized that each reflection pulse may be allocated to at least one cell 32, by the location of the pixels that are activated by the reflection pulse. If a reflection pulse is located close a cell border, part of the reflection pulse may activate pixels in one or more neighboring cells as well.

As noted, the system may be configured to simultaneously sweep plural light beams across the scene, separated by a minimum angular distance for reasons of eye safety. This is shown in FIG. 4B, where the path of reflected light from another scanning beam is shown as a dotted arrow 21". In such a configuration, it may be advantageous for the size of the respective cell 32 to be smaller than the known spatial separation of reflection pulses from different scanning beams on the pixel array 31. In other words, the grid of cells is defined to avoid that pixels 33 within the respective cell 32 are activated by reflected light from more than one scanning beam at any time point. This simplifies determination of 2D trajectories in the presence of plural scanning beams.

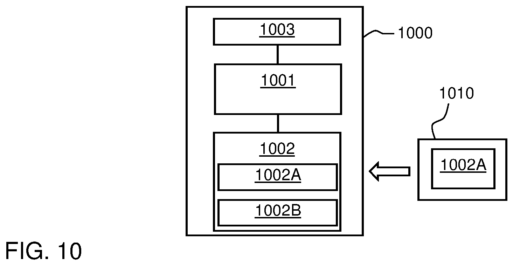

In the following, step 104 of the method 100 will be described with reference to the grid of cells 32 as shown in FIGS 4A-4B. A flow chart of an example procedure corresponding to step 104 is shown in FIG. 5A. For further illustration, block arrows are added to the right of the flow chart to indicate input data used and/or output data provided by the respective step. The respective block arrow may correspond to operations of accessing a memory (cf. 1002 in FIG. 10)

Initially, step 201 is performed to define the grid of cells for the pixel array. As noted, the grid of cells is a computational construct. The use of cells enables fast and efficient sorting and data reduction of the incoming stream of events from the pixel array, by steps 202-205. The data reduction involves generating summary data for each cell. The summary data for a cell represents the incoming events with pixel positions that fall within the cell during a respective first time period, Δt1, denoted "summary period" in the following. Steps 202-205 may be continuously performed to produce, for a plurality of consecutive summary periods, a group of summary data for subsequent processing by steps 206-210.

In the illustrated example, events are gathered in step 202 per cell during the summary period, Δt1. Step 202 involves mapping the pixel position of the respective event to the cells and allocating an event to a cell when the pixel position falls within the cell. When the summary period has expired (step 203), summary data for the events within the respective cell during the summary period is output in step 204. In FIG. 5A, the summary data of a cell with index i is designated SDi. The summary data at least includes a representative position of the events within the respective cell. It is realized that the summary data may be null data if no events are gathered within a particular cell during Δt1. If a second time period, Δt2, has not yet expired after step 204, the procedure returns to step 202. Thus, steps 202-205 are performed to generate a group or "frame" of summary data for each cell during the second time period, denoted "frame period" herein. If the frame period, Δt2, has expired, step 205 proceeds to step 206 for processing of the group of summary data generated during frame period.

In a computer-efficient implementation, the summary data is computed as a running aggregation of data from the incoming events. For example, one or more calculation variables may be assigned to each cell to be reset at start of each summary period and configured to accumulate data from incoming events. In other words, the calculation variable is updated recursively and on-the-fly, as new events arrive. For example, the aggregation may involve a summation, a multiplication, a maximum extraction, a minimum extraction, or any combination thereof.

The determination of summary data for a cell Ci is further exemplified in FIG. 6A. In Fig. 6A, the cell Ci is shown at three consecutive summary periods, where filled squares indicate pixels that are activated during the respective summary period. It is realized that the activated pixels will result in a respective event being output by the pixel array. For example, in the left-most illustration, the cell Ci contains 10 activated pixels, and thus results in 10 events being gathered by step 202 during the corresponding summary period. Step 204 will output summary data for each summary period, resulting in SDi_t1, SDi_t2 and SDi_t3 in FIG. 6A.

In some embodiments, the summary period, Δt1, is set to include a single reflection pulse. In other words, Δt1 is set to be larger than the pulse duration P and smaller than the pulse-to-pulse interval PP (FIG. 3). This allows the summary data from a summary period to represent an individual reflection pulse, which will maximize the spatial and temporal resolution of the summary data. However, it is conceivable for the summary period to be set to include plural reflection pulses.

Reverting to FIG. 6A, the activated pixels within the cell may thus represent one pulse reflection, and the summary data may designate a representative position of each pulse reflection within the cell Ci. In the following, the term "representative position" is abbreviated RP.

In some embodiments, the frame period, Δt2, is set to exceed the time required to sweep reflected pulses across any individual cell on the pixel array. Thereby, the reflected pulses are allowed to form a complete path across at least one cell during a frame period. It may also be desirable to set Δt2 to be smaller than the time required to sweep reflected pulses across the entire pixel array in the x direction or the y direction, i.e., half a sweep period. It may be advantageous for Δt2 to be long, since a longer Δt2 reduces the number of inter-cell evaluations (step 208, below), which costly in terms of processing. The latency between light detection and output of trajectory data scales with Δt2. In some embodiments, to balance these contradictory needs, the frame period is set to include at least 50, 100 or 150 summary periods, while being smaller than half a sweep period.

In some embodiments, irrespective of the number of pulse reflections per Δt1, RP may be calculated to approximately represent or correspond to a center point of the pixel positions within the cell. For example, RP may be calculated as an average of the pixel positions of the incoming events for the cell. If the pixel position is given by first and second coordinates (cf. x,y in FIGS 4A-4B), the average may be calculated separately for the first and second coordinates. Thus, RP may be given by first and second values in the local coordinate system, with the first value calculated as an average of the first coordinates of the pixel positions, and the second value calculated as an average of the second coordinates of the pixel positions. Any average may be used, including but not limited to arithmetic mean, geometric mean, median, root mean square, mid-range, centroid, etc.

In some embodiments, step 204 is configured to output the summary data for a cell provided that the number of events within the cell during Δt1 exceeds a threshold value. The threshold value may be set to reduce the impact of ambient light and noise and/or increase the likelihood that the summary data indeed represents at least one reflection pulse. In a non-limiting example, the threshold value is set to 2, 3, 4 or 5.

As will be motivated further below, the summary data may include further representative data of the events that fall within the cell. FIG. 6B shows an example content of summary data, SDi, for a cell Ci. In FIG. 6B, RPi designates the representative position, ti designates a representative time, and SEi is an extent parameter. The representative time ti is given by the time stamps of the events gathered during Δt1. For example, ti may be set to a minimum, median, maximum or average of the time stamps. The extent parameter SEi is an estimate of the spatial extent of the events that fall within the cell, specifically the extent in pixel positions. If pixel positions are given in first and second coordinates (cf. x,y in FIGS 4A-4B), SEi may be determined separately for the first and second coordinates. Thus, in the example of FIG. 6A, SEi may be determined to represent the horizontal and vertical extent of the combination of black pixels within the cell Ci for the respective summary period. In one example, SEi may be given by maximum and minimum pixel positions, or equivalently by the difference ("range") between the maximum and minimum pixel positions. The range is a measure of statistical dispersion. It is conceivable that SEi is given by another measure of statistical dispersion of the pixel positions, such as variance, standard deviation, range, interquartile range, median absolute deviation, average absolute deviation, entropy, etc. In some embodiments, SEi includes two or more different extent parameters for at least one of the dimensions.

Returning to FIG. 5A, step 206 involves an evaluation of the group of summary data that is generated during Δt2 for the respective cell. Step 206 is aimed at determining one or more trajectories of RPs within the cell. In FIG. 5A, the group of summary data determined for a cell Ci during a frame period is designated [SDi]. Step 206 is confined to individual cells and is thus an "intra-cell evaluation". Step 206 results in one or more trajectories for the respective cell. A trajectory contains RPs that form a spatially and temporally coherent trajectory within a cell. Such a cell-specific trajectory is denoted "cell trajectory" or CT in the following. In FIG. 5A, the set of cell trajectories determined for cell Ci is designated [CTi]. Embodiments of step 206 are described further below with reference to FIG. 5B

A trajectory may be stored in any suitable data structure during execution of the trajectory determination procedure 104, for example a one-dimensional array, a table, a dynamic array, an associative array, a linked list, etc.

As used herein, "spatially coherent" implies that the RPs are mutually separated by less than a maximum distance. By analogy, "temporally coherent" implies that the RPs, by their representative times, are mutually separated by less than a maximum time difference. The maximum distance and the maximum time difference are, for example, dependent on the sweep speed of the scanning beam, the pulse rate of the light, and the optical system of the event camera. Nominal values for the distance and time difference may be determined analytically or experimentally for the system, and the maximum values may be set based on the nominal values.

Step 206 may be followed by an adjustment step 207, in which terminal points of the respective cell trajectory is processed for adjustment. Step 207, which is optional, is described below with reference to FIG. 5D.

In step 208, cell trajectories generated by step 206 (and optionally adjusted by step 207) are processed for splicing, if possible, into one or more trajectories that extend over plural cells. Step 208 is performed across cells and is thus an "inter-cell evaluation". The respective trajectory contains representative positions that form a spatially and temporally coherent trajectory that extends within a cell and, possibly, across cells. A trajectory from step 208 is denoted "grid trajectory" or GT in the following. In FIG. 5A, the set of grid trajectories determined for all cells is designated [GT]. It is to be understood that a GT need not extend across a border between cells, but may be identical to a CT if this CT cannot be merged with another CT in step 208.

Step 208 may be followed by a further evaluation step 209, denoted inter-frame evaluation, in which the grid trajectories [GT] are processed for merging, if possible, with grid trajectories [GT]p determined for a preceding frame period. Step 209, which is optional, is described below with reference to FIG. 5E.

In step 210, trajectory data TD is output based on the grid trajectories [GT] from step 208, optionally after merging in step 209. In some embodiments, step 210 simply includes the grid trajectories [GT] in TD. In some embodiments, as shown by dashed lines in FIG. 5A, step 210 comprises a step 210A of operating a curve fitting algorithm on the RPs of the respective GT to determine a resulting curve that matches the RPs with sufficient accuracy. Any conventional curve fitting algorithm may be used. For the example, the curve fitting algorithm may be based on least squares. The curve fitting algorithm generates curve definition data of the resulting curve. In step 210B, the curve definition data is provided for output in the trajectory data. By replacing GT for the curve definition data, the size of TD may be reduced significantly. Further, the curve fitting may yield TD with sub-pixel precision. The curve fitting algorithm may be configured to fit a predefined function to the RPs, for example a polynomial function of predefined order, a spline function, a trigonometric function, etc. In one example, the predefined function is a third order polynomial. In a variant, the curve fitting algorithm may test a plurality of predefined functions to the RPs, and output curve definition data for the best fit.

In some embodiments, step 210 may include calculating and evaluating the residual between the resulting curve and the RPs of the GT. If the residual exceeds a threshold value, the resulting curve may be discarded instead of being included in the trajectory data. This reduces the risk for errors in the determination of object properties by in the downstream processing by the module 62.

FIG. 5B is a flowchart of an example procedure corresponding to the intra-cell evaluation 206 in FIG. 5A. The procedure 206 evaluates all RPs within the respective cell with respect to a spatial constraint, and possibly a temporal constraint, to allocate the RPs to one or more trajectories within the cell ("cell trajectories"). In the example of FIG. 5A, the procedure 206 comprises a step 206A of initiating a new trajectory for the first RP selected in step 206B. In step 206B, an RP is selected among the available RPs. In step 206C, the selected RP is evaluated for detection of a further RP within a spatial search area, SSA, around the selected RP. The SSA includes a plurality of pixels in both the x direction and the y direction and may have any shape, for example circular, elliptical, square, rectangular, etc. If a further RP is detected within the SSA by step 206C, step 206D may be performed to evaluate if the difference in representative time between the selected RP and the further RP is less than a maximum time difference (ΔT_MAX). If so, step 206E is performed to add the further RP to the trajectory of the selected RP, if the further RP is not already included in the trajectory. After step 206E, the procedure 206 returns to step 206B to select a new RP among non-selected RPs. The procedure 206 continues until all RPs have been selected. If a further RP fails the test in step 206B or step 206C, this means that the further RP does not belong the same trajectory as the selected RP and a new trajectory is initiated for the further RP in step 206F before the procedure returns to step 206B.

The procedure in FIG. 5B is given as a non-limiting example. For example, the search procedure may be optimized to avoid redundant comparisons. Also, the Applicant has found that the temporal evaluation of step 206C may be omitted, without major reduction in accuracy of the trajectory data produced by step 210, at least for some configurations of the system. In principle, any processing-efficient algorithm for spatial or spatio-temporal clustering may be used in step 206.

In FIG. 5A, the intra-cell evaluation of step 206 is shown to be performed for a respective batch of summary data that is produced during a frame period (Δt2). Thus, step 206 is performed once every frame period. In a variant, the intra-cell evaluation of step 206 is performed as soon an instance of summary data is produced by step 204. In such a variant, the intra-cell evaluation will thus be performed once every summary period (Δt1). In other variants, the intra-cell evaluation will be performed on a time scale between Δt1 and Δt2.

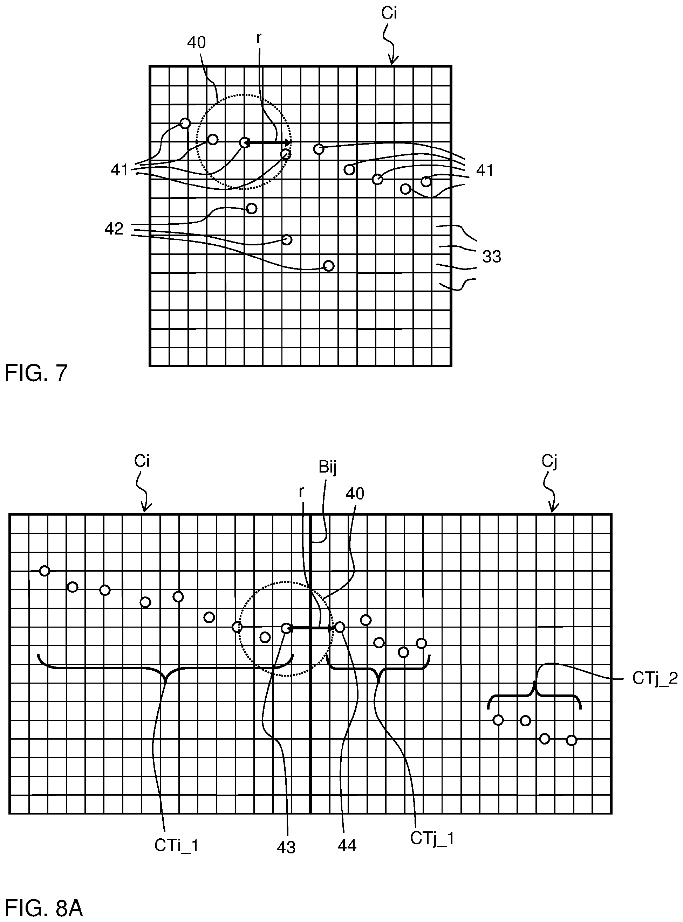

The procedure 206 is further exemplified in FIG. 7, which illustrates a cell Ci and its pixels 33. Open circles indicate RPs that has been determined by steps 202-205 for the cell Ci during a frame period. A spatial search area, SSA, 40 in the form of a circle with radius r is centered on a selected RP. In the illustrated example there are two further RPs within the SSA 40. Given the SSA 40, the procedure 206 will identify a first trajectory consisting of RPs 41, and a second trajectory consisting of RPs 42.

In some embodiments, the procedure 206 comprises a concluding step of evaluating the number of RPs in the respective trajectory and discarding any trajectory that contains less than a predefined number of RPs. The Applicant has found this to significantly improve the processing-efficiency of the procedure 104 as a whole, by early removal of trajectories that are likely non-relevant. In one example, the predefined number is in the range of 2-10.

FIG. 5C is a flowchart of an example procedure corresponding to the inter-cell evaluation 208 in FIG. 5A. The procedure 208 evaluates terminal points of cell trajectories between spatially adjacent cells with respect to a spatial constraint and a temporal constraint and selectively combines ("splices") cell trajectories into grid trajectories that extend in plural cells. As used herein, a "terminal point" is either a starting point or an end point of a trajectory. The starting point is given by the RP having the earliest representative time, and the end point is given by the RP having the latest representative time.

The procedure 208 may be limited to evaluating cell trajectories that have a terminal point sufficiently close to a border between two cells. This will increase processing efficiency by reducing the number of evaluations in the procedure 208. For example, for a cell trajectory to be evaluated by the procedure 208, the distance between one of its terminal points and a cell border may be less than a distance limit. The distance limit may correspond to a nominal distance between center points of reflection pulses on the pixel array. Further, the procedure 208 may be limited to evaluating pairs of cell trajectories that both have a terminal point sufficiently close to the same border. This will further reduce the number of evaluations in the procedure 208. Accordingly, as shown in FIG. 5B, the procedure 208 may comprise an initial step 208A of determining a set of candidate pairs of cell trajectories to be evaluated.

In the example of FIG. 5B, the procedure 208 further comprises a step 208B of selecting a pair of cell trajectories for evaluation. The selected pair comprises a first cell trajectory in a first cell and a second cell trajectory in a second cell, which borders on the first cell. The first trajectory has an end point and the second cell trajectory has a starting point located in proximity of the border between the first and second cells. In step 208B, the time difference between the end point of the first trajectory and the starting point of the second trajectory is determined, given by the difference between their representative times. In step 208C, a distance on the pixel array between the end point of the first trajectory and the starting point of the second trajectory is determined, given by the difference between their RPs. Thus, step 208B determines the temporal spacing between two cell trajectories, and step 208C determines the spatial separation of the two cell trajectories. In step 208D, the temporal spacing from step 208B is evaluated in relation to a maximum time difference (ΔT_MAX), which may be identical to the one used in step 206D. If the temporal spacing exceeds ΔT_MAX, the procedure returns to step 208B, which selects another pair of cell trajectories for evaluation. If the temporal spacing is acceptable, step 208E is performed to evaluate the spatial separation from step 208C in relation to a maximum distance (D_MAX). If the spatial separation exceeds D_MAX, the procedure returns to step 208B, which selects another pair of cell trajectories for evaluation. If the spatial separation is acceptable, step 208F is performed to merge the first and second trajectories to form a grid trajectory. In merging the trajectories, the end point of the first trajectory is logically connected to the starting point of the second trajectory. Step 208E may or may not involve including the RPs of the first and second trajectories in a common data structure. The procedure 208 continues until all relevant pairs of cell trajectories have been evaluated.

The procedure 208 is further exemplified in FIG. 8A, which shows two cells Ci, Cj with a common border Bij. Open circles indicate RPs that have been determined by steps 202-205 for the cells Ci, Cj during a frame period. As indicated, RPs in cell Ci have been allocated to cell trajectory CTi_1, and RPs in cell Cj have been allocated to cell trajectories CTj_1 and CTj_2. By step 208A, CTi_1 and CTj_1 have been identified as a candidate pair for merging. In the illustrated example, a circular SSA 40 with radius r is centered on the end point 43 of CTi_1 and evaluated for presence of the starting point 44 of CTj_1, as part of the spatial evaluation of steps 208C, 208E (FIG. 5C). Thus, in the illustrated example, the radius r corresponds to D_MAX. In FIG. 8A, the spatial evaluation will result in a decision not to merge CTi_1 and CTj_1.

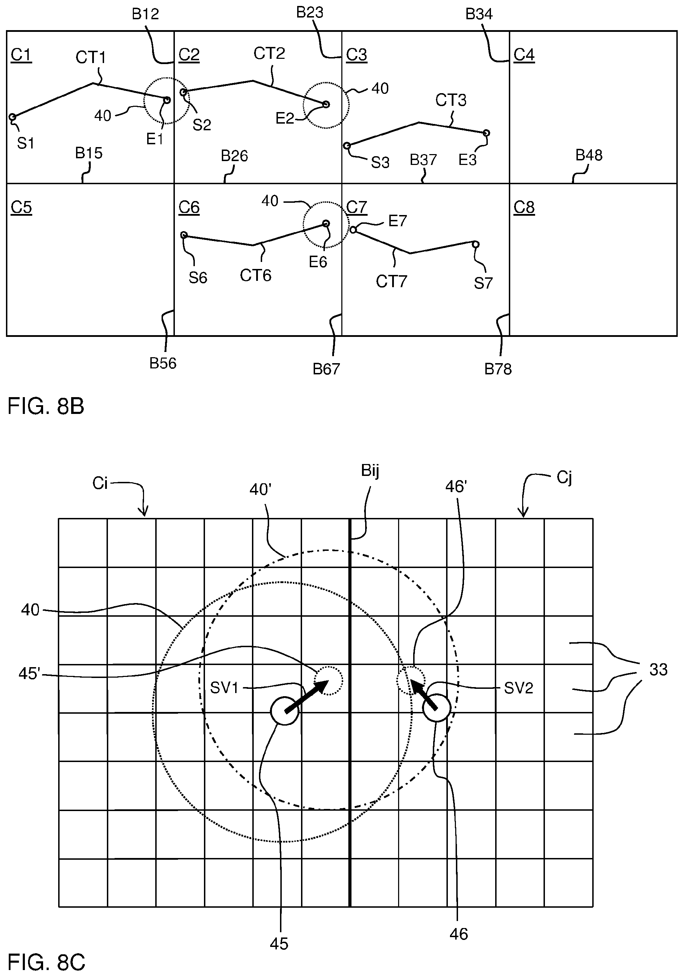

Another example of the operation of the procedure 208 is shown in FIG. 8B, which is a plan view of cells Cn, with n being a cell index. Pairs of cells Cn, Cm are separated by borders, designated by Bnm. A cell trajectory CTn has been determined by step 206 for each of C1, C2, C3, C6 and C7. Each cell trajectory has a starting point and an end point, designated by Sn and En, respectively. It is assumed that step 208A has identified the following CT pairs as candidate pairs for merging: (CT1,CT2), (CT2,CT3) and (CT6,CT7). In the spatial evaluation of (CT1,CT2), an SSA 40 is arranged on E1 and evaluated for presence of S2. Assuming that (CT1,CT2) also passes the temporal evaluation, CT1 and CT2 will be merged to form a first GT. Correspondingly, in the spatial evaluation of (CT2,CT3), an SSA 40 is arranged on E2 and evaluated for presence of S3. The spatial evaluation will thus result in a decision not to merge CT2 and CT3, and CT3 will thereby form a second GT. In the situation that (CT2,CT3) passes both the spatial evaluation and the temporal evaluation, CT3 would be merged with CT2 and thereby be included in the first GT. In the evaluation of (CT6,CT7), an SSA 40 is arranged on E6 and evaluated for presence of S7. The spatial evaluation will result in a decision not to merge CT6 and CT7, which thereby form a third GT and a fourth GT, respectively.

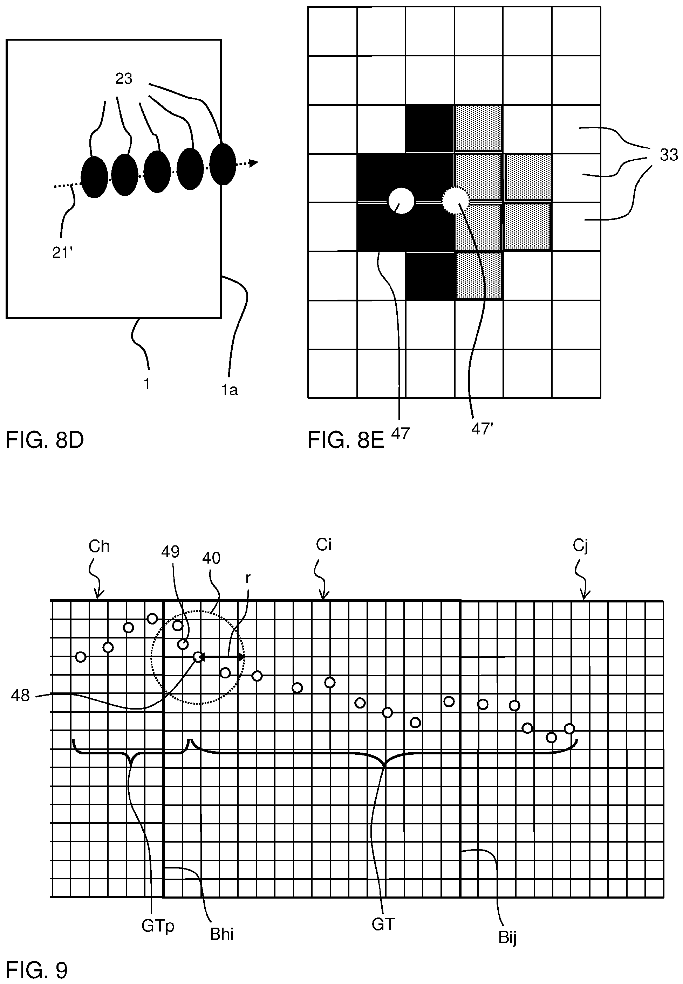

The adjustment step 207 in FIG. 5A will now be explained, motivated and exemplified with reference to FIG. 5D and FIGS 8C-8E. The adjustment step 207 is performed to spatially adjust the terminal points of the cell trajectories determined by step 206. The motivation for step 207 is two-fold. Turning to FIG. 8D, this figure shows a sequence of light spots 23 on an object 1 as a light beam 21' is swept across the object 1. Each light spot 23 corresponds to a light pulse (22 in FIG. 3). In FIG. 8D, one of the light spots 23 hits an outer edge or contour 1a of the object 1. This means that only part of the light spot 23 will be reflected by the object 1. FIG. 8E shows a portion of a pixel array that receives a reflection pulse from the light spot 23 that hits the edge 1a in FIG. 8D. Pixels activated by the reflection pulse are indicated by black squares. FIG. 8E also shows an RP 47 that may be calculated based on the pixel positions of the activated pixels. Dotted areas in FIG. 8E indicate additional pixels that would have been activated if the light spot 23 had been fully reflected by the object 1. Reference numeral 47' indicate the true RP that would have been calculated for the combination of black and dotted pixels. It is realized the calculated RP 47 is not an exact representation of the location of the edge 1a, which is located at the true RP 47'. Thus, one motivation for step 207 is to improve the determination of edge location on objects. A second motivation is to improve the positional accuracy of terminal points that are located close to borders between cells. This may also be understood from FIG. 8E, if black and dotted squares are seen to be located in different cells separated by a border. In other words, the border extends vertically through a reflection pulse on the pixel array. Clearly, there will be a discrepancy between the RP 47 that is calculated for the pixel positions in the left-hand cell and the true RP 47'. The same applies for the right-hand cell. The adjustment of the terminal points may improve the accuracy of the inter-cell evaluation by step 208.

The adjustment step 207 is based on the insight that information about the extent of the activated pixels during a summary period (Δt1) may be used to adjust the RP in the summary data to bring the RP closer to the true RP. This is the reason to include the extent parameter SEi in the summary data.

FIG. 5D is a flowchart of an example procedure corresponding to step 207 in FIG. 5A. The procedure 207 may be performed for every terminal point of every cell trajectory generated by step 206, or only for terminal points that are located sufficiently close to a border between two cells (for example within D_MAX). In step 207A, the extent parameter is retrieved from the summary data of a current terminal point to be adjusted. In step 207B, the RP of the current terminal point is adjusted based on the extent parameter from step 207A. The adjustment generally serves to extend the cell trajectory, whether the adjustment is performed for a starting point or an end point. In some embodiments, step 207B comprises determining a movement direction of the cell trajectory at the current terminal point, and adjusting the RP of the current terminal point by a spatial shift in the movement direction. The RP of a starting point will be shifted against the movement direction, and the RP of an end point will be shifted along the movement direction. The movement direction of the cell trajectory is directly given by the time sequence of RPs in the trajectory. In some embodiments, one of the first and second coordinates may be ignored during step 207, for example if the scanning beam is known to be swept back and forth generally parallel to a coordinate axis of the pixel array, for example horizontally. In this case, the adjustment may be made only along this coordinate axis for all cell trajectories.

In some embodiments, the spatial shift is determined as a function of the extent parameter, and optionally the movement direction. For example, the spatial shift may be a shift vector in the local coordinate system of the pixel array. As used herein, a "vector" has a magnitude and a direction. The direction of the shift vector may be parallel to the movement direction. In step 207B, the shift vector may be added to the RP of the current terminal point.

In some embodiments, step 207 may switch between using different extent parameters for determining the adjustment. For example, the summary data may include a first extent parameter and a second extent parameter, where the first extent parameter is regarded as a better approximation of the extent but is more sensitive to outliers than the second extent parameter. The first extent parameter may be minimum and maximum pixel positions, or a corresponding range value. The second extent parameter may be a standard deviation, or any other outlier-suppressing measure of statistical dispersion. Step 207B may determine the adjustment based on the first extent parameter by default. However, if a ratio between the range value and the standard deviation exceeds a predefined value, step 207B may switch to determine the adjustment based on the second extent parameter. A large ratio may indicate that the first parameter is affected by outliers and does not properly represent the extent.

The effect of the procedure 207 is further exemplified in FIG. 8C, which shows two cells Ci, Cj with a common border Bij. An end point 45 has been determined in cell Ci, and a starting point 46 has been determined in cell Cj. In the inter-cell evaluation by step 208, an SSA 40 is arranged at the end point 45 and evaluated for presence of a starting point. As seen, the starting point 46 is located outside the SSA 40 and the cell trajectories will not be merged even if they should. By step 207, a first shift vector SV1 is determined for the end point 45, and a second shift vector SV2 is determined for the starting point 46. An adjusted end point 43' is determined by adding SV1 to the end point 45, and an adjusted starting point 45' is determined by adding SV2 to the starting point 46. After this adjustment, an SSA 40' that is arranged at the adjusted end point 46' will include the adjusted starting point 46'. Thus, the inter-cell evaluation by step 208 will correctly merge the cell trajectories.

The inter-frame evaluation 209 in FIG. 5A will now be explained, motivated and exemplified with reference to FIG. 5E and FIG. 9. The motivation for step 209 is that a grid trajectory may continue beyond the expiry of the frame period (Δt2). In other words, even if a grid trajectory has an apparent end point on the pixel array, the same grid trajectory may actually continue from an apparent starting point that is determined by steps 206 and 208 when processing a subsequent frame of summary data, i.e. for a subsequent frame period.

Since it is desirable to provide the trajectory data as soon as possible, it is preferable to perform the inter-frame evaluation of step 209 by comparing starting points of grid trajectories for a current frame to end points of grid trajectories for a preceding frame. This is exemplified in FIG. 9. Here, a grid trajectory of a current frame, GT, has an apparent starting point 48 in cell Ci and extends into cell Cj across border Bij, and a grid trajectory of the previous frame, GTp, extends from cell Ch into cell Ci, across border Bhi, and has an apparent end point 49 inside cell Ci. In the inter-frame evaluation, a circular SSA 40 is centered on the starting point 48 of GT and evaluated for presence of an end point. In the illustrated example, the end point 49 of GTp is located within the SSA 40. If the time difference between the points 48, 49 fulfils a temporal criterion, GTp and GT may be combined (spliced) to form an updated GT.

Turning now to the example of FIG. 5E, it will be seen that the procedure of step 209 is similar to the procedure of step 208. The procedure 209 may be limited to end points in the previous frame that are temporally close to the end of the previous frame, and starting points in the current frame that are temporally close to the start of the current frame. In this context, "temporally close" may imply that the time difference is less than a predefined limit. This will increase processing efficiency by reducing the number of evaluations in the procedure 209. Accordingly, as shown in FIG. 5E, the procedure 209 may comprise an initial step 209A of determining a set of candidate pairs of grid trajectories to be evaluated.

In the example of FIG. 5E, the procedure 209 further comprises a step 209B of selecting a pair of grid trajectories for evaluation. The selected pair comprises a first grid trajectory of the previous frame and a second grid trajectory of the current frame. The first trajectory has an end point and the second cell trajectory has a starting point located in temporal proximity of the transition from the previous frame to the current frame. In step 209B, the time difference between the end point of the first trajectory and the starting point of the second trajectory is determined, given by the difference between their representative times when transferred into a common time scale. In step 209C, a distance on the pixel array between the end point of the first trajectory and the starting point of the second trajectory is determined, given by the difference between their RPs. Thus, step 209B determines the temporal spacing between two grid trajectories in different frames, and step 209C determines the spatial separation of the two grid trajectories. In step 209D, the temporal spacing from step 209B is evaluated in relation to a maximum time difference (ΔT_MAX), which may be identical to the one used in step 208D. If the temporal spacing exceeds ΔT_MAX, the procedure returns to step 209B, which selects another pair of grid trajectories for evaluation. If the temporal spacing is acceptable, step 209E is performed to evaluate the spatial separation from step 209C in relation to a maximum distance (D_MAX), which may be identical to the one used in step 208E. If the spatial separation exceeds D_MAX, the procedure returns to step 209B. If the spatial separation is acceptable, step 209F is performed to merge the first and second grid trajectories. The procedure 209 continues until all relevant pairs of grid trajectories have been evaluated.

In the foregoing, it is assumed that the summary period (Δt1) is a fixed time period. In a variant, the summary period is variable and given by the presence of incoming events. In the example of FIG. 5A, step 203 may be replaced for a step that detects, for each cell, if the time since last receipt of an event exceeds a time limit. If the time limit is exceeded, step 204 is performed for this cell. The time limit may be set to be larger than the pulse duration P and smaller than the pulse-to-pulse interval PP. This means that the summary period may differ between the cells and also change over time for the respective cell.

In a further variant, step 203 may be time-synchronized with the generation of light pulses, via a synchronization signal provided from the beam scanner 21 to the processing sub-system 61. Thereby, the summary period may be actively started when a light pulse is known to be generated and thus a reflection pulse should be received by the pixel array. This may improve the accuracy of the summary data and the robustness of the trajectory determination. For example, in a situation when another system happens to illuminate the scene with a scanning or non-scanning light beam, the time-synchronization may significantly reduce the interference of the other system on the summary data.

Although the foregoing description has been given for pulsed light, the technique is equally applicable to scanning beams made up of continuous light, also known as continuous wave (cw) light. For cw light, the summary period (Δt1) cannot be defined in relation to pulsations of light, but may still be defined to achieve a suitable spatial and temporal resolution of the summary data. However, compared to pulsed light, cw light may result in summary data that is more affected by noise.

FIG. 10 is a block diagram of an exemplifying device or machine 1000, which may be configured to perform any of the methods, procedures and functions described herein, or part thereof, by a combination of software and hardware circuitry, or exclusively by specific hardware circuitry. In FIG. 10, the device 1000 comprises processor circuitry 1001, which may be or include a central processing unit (CPU), graphics processing unit (GPU), microcontroller, microprocessor, ASIC, FPGA, or any other specific or general processing device. The processor circuitry 1001 may execute instructions 1002A stored in a memory, such as memory 1002, in order to control the operation of the device 1000. The instructions 1002A when executed by the processor circuitry 1001 may cause the device 1000 to perform any of the methods described herein, or part thereof. The instructions 1002A may be supplied to the device 1000 on a computer-readable medium 1010, which may be a tangible (non-transitory) product (for example magnetic medium, optical disk, read-only memory, flash memory, etc.) or a propagating signal. As indicated in FIG. 10, the memory 1002 may also store data 1002B for use by the processor circuitry 1001, for example a definition of the cells, values of Δt1, Δt2, D_MAX, SSA, r, ΔT_MAX, etc. The memory 1002 may comprise one or more of a buffer, flash memory, hard drive, removable media, volatile memory, non-volatile memory, random access memory (RAM), or another suitable data storage device. Such a memory 1002 is considered a non-transitory computer-readable medium. The device 1000 may further include an I/O interface 1003, which may include any conventional communication interface for wired or wireless communication. For example, the device 1000 may be arranged to receive the stream of events (cf. ES in FIG. 1B) and provide the trajectory data TD (cf. FIG. 1A) via the interface 1003.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims.

Further, while operations are depicted in the drawings in a particular order, this should not be understood as requiring that such operations be performed in the particular order shown or in sequential order, or that all illustrated operations be performed, to achieve desirable results.

In the following, clauses are recited to summarize some aspects and embodiments as disclosed in the foregoing.

C1. A computer-implemented method of processing a data stream of events from an event-based sensor (30), which comprises a pixel array (31) and is arranged to receive photons reflected or scattered by a region on an object (1) when illuminated by a scanning beam (21) of light, wherein each event in the data stream originates from a pixel (33) in the pixel array (31) and comprises a pixel position of the pixel (33) and a time stamp associated with the event, said method comprising: defining (201) a grid of cells (32) for the pixel array (31), each cell (32) comprising a plurality of pixels (33); generating (202-205), for a respective cell (32) in the grid, summary data for incoming events that comprise pixel positions that fall within the respective cell (32) during a first time period (Δt1), the summary data comprising a representative position for the pixel positions that fall within the respective cell during the first time period (Δt1); performing (206), for the respective cell (32), an intra-cell evaluation of the summary data generated for a second time period (Δt2) that comprises a plurality of first time periods (Δt1), to generate a cell trajectory of representative positions that form a spatially and temporally coherent trajectory within the respective cell; performing (208) an inter-cell evaluation of a plurality of cell trajectories generated for a plurality of cells in the grid for the second time period (Δt2), to generate a grid trajectory of representative positions that form a spatially and temporally coherent trajectory within the plurality of cells; and providing (210) trajectory data representing the grid trajectory.

C2. The method of C1, wherein the summary data includes a representative time for time stamps of the incoming events, and wherein the spatially and temporally coherent trajectory comprises a sequence of representative positions that are mutually separated in representative time by less than a maximum time difference and in representative positions by less than a maximum distance.

C3. The method of C2, wherein said performing (206) the intra-cell evaluation comprises: evaluating (206C) a respective representative position in the summary data for detection of a further representative position within a search area (40) that defines said maximum distance around the respective representative position, and including (206E) the further representative position in the cell trajectory of the respective representative position if the further representative position is detected within the search area (40).

C4. The method of C3, wherein said including (206E) the further representative position is only performed if the respective representative position and the further representative position are separated (206D) in representative time by less than the maximum time difference.

C5. The method of any one of C2-C4, wherein each cell trajectory extends from a starting point to an end point, wherein said performing the inter-cell evaluation (208) comprises: evaluating (208B), in relation to the maximum time difference, a time difference between the end point of a first cell trajectory of a first cell in the grid and the starting point of a second cell trajectory of a second cell in the grid, wherein the second cell is spatially adjacent to the first cell; and evaluating (208C), in relation to the maximum distance, a distance between the representative position of the end point and the representative position of the starting point, and including (208F) the first cell trajectory and the second cell trajectory in the grid trajectory if the time difference is less than the maximum time difference (208D) and the distance is less than the maximum distance (208E).

C6. The method of C5, wherein said inter-cell evaluation (208) is only performed when the representative position of the end point and the representative position of the starting point are within a distance limit to a border between the first and second cells.

C7. The method of any preceding clause, wherein the summary data further comprises an extent parameter that represents a combined extent of the pixel positions that fall within the respective cell (32) during the first time period (Δt1), wherein each cell trajectory extends between terminal points, and wherein said method further comprises an adjustment procedure (207) comprising: obtaining (207A), from the summary data, the extent parameter for a terminal point of the respective cell trajectory, and adjusting (207B) the representative position of the terminal point based on the extent parameter.

C8. The method of C7, wherein the terminal point is at least one of a starting point or an end point of the respective cell trajectory.

C9. The method of C7 or C8, wherein said adjusting (207B) the representative position comprises determining a shift vector in a coordinate system of the pixel array based on the least one extent parameter, wherein the representative position of the terminal point is adjusted by adding the shift vector to the representative position of the terminal point.

C10. The method of any one of C7-C9, wherein the adjustment procedure results in an extension of the respective cell trajectory.

C11. The method of any one of C7-C10, wherein the extent parameter comprises one or more of: minimum and maximum values of the pixel positions; a range of the pixel positions; a standard deviation of the pixel positions; a variance of the pixel positions; an interquartile range of the pixel positions; a median absolute deviation of the pixel positions; or an average absolute deviation of the pixel positions.

C12. The method of any preceding clause, further comprising: operating (210A) a fitting algorithm on the representative positions of the grid trajectory, to generate curve definition data for a curve fitted to the representative positions of the grid trajectory, wherein the trajectory data comprises the curve definition data.

C13. The method of any preceding clause, wherein the representative position corresponds to a center point of the pixel positions that fall within the respective cell during the first time period (Δt1).

C14. The method of C13, wherein the center point is calculated as an average of the pixel positions that fall within the respective cell during the first time period (Δt1).

C15. The method of any preceding clause, wherein the pixel position is defined by first and second coordinates in a coordinate system (10'), and wherein the representative position is defined by first and second values in the coordinate system (10'), wherein the first and second values are calculated as an average of the first coordinates and the second coordinates, respectively, of the pixel positions that fall within the respective cell during the first time period (Δt1).

C16. The method of any preceding clause, wherein said generating (202-205) the summary data is performed only when a count of the pixel positions that fall within the respective cell (32) during the first time period (Δt1) exceeds a threshold value.

C17. The method of any preceding clause, wherein the cells (32) in the grid are defined to be non-overlapping.

C18. The method of any preceding clause, wherein the light in the scanning beam (21) is pulsed light.

C19. The method of C18, wherein the pulsed light comprises a sequence of light pulses, and wherein the first time period (Δt1) comprises a predefined number of light pulses.

C20. The method of C19, wherein the predefined number is one.

C21. The method of any one of C18-C20, wherein said generating (202-205) the summary data is performed in time synchronization with pulsations of the pulsed light.

C22. The method of any preceding clause, wherein the second time period (Δt2) comprises at least 50, 100 or 150 first time periods (Δt1).

C23. A computer-readable medium comprising computer instructions (1002A) which when executed by processor circuitry (1001) causes the processor circuitry (1001) to perform the method of any one of C1-C22.

C24. A processing device, which comprises an interface (1003) for receiving a data stream of events from an event-based sensor (30; 40; 50) and is configured to perform the method of any one of C1-C22.

C25. The processing device of C24, which is or comprises an FPGA, an ASIC, or a GPU.

C26. A system comprising: at least one beam scanning device (20) configured to generate a scanning beam (21) of light to illuminate the object (1); at least one event-based sensor (30, 40, 50) that comprises a pixel array (31, 41, 51) and is arranged to receive photons reflected or scattered by a region on the object (1) when illuminated by the scanning beam (21), wherein said at least one event-based sensor (30, 40, 50) is configured to generate an event for a pixel (32) in the pixel array (31, 41, 51) when a number of photons received by the pixel (32) exceeds a threshold, wherein said at least one event-based sensor (30, 40, 50) is configured to output events as a respective data stream, wherein each event in the respective data stream comprises an pixel position of the pixel (32) and a time stamp associated with the event; and a processing sub-system (61), which comprises at least one processing device in accordance with C24 or C25 and is configured to receive the respective data stream from the at least one event-based sensor (30, 40, 50) and output trajectory data.

C27. The system of C26, further comprising a detection sub-system (62) configured to receive the trajectory data and determine a property of the object (1) based thereon.

## Claims

1. A computer-implemented method of processing a data stream of events from an event-based sensor (30), which comprises a pixel array (31) and is arranged to receive photons reflected or scattered by a region on an object (1) when illuminated by a scanning beam (21) of light, wherein each event in the data stream originates from a pixel (33) in the pixel array (31) and comprises a pixel position of the pixel (33) and a time stamp associated with the event, said method comprising:
defining (201) a grid of cells (32) for the pixel array (31), each cell (32) comprising a plurality of pixels (33),
generating (202-205), for a respective cell (32) in the grid, summary data for incoming events that comprise pixel positions that fall within the respective cell (32) during a first time period (Δt1), the summary data comprising a representative position for the pixel positions that fall within the respective cell during the first time period (Δt1),
performing (206), for the respective cell (32), an intra-cell evaluation of the summary data generated for a second time period (Δt2) that comprises a plurality of first time periods (Δt1), to generate a cell trajectory of representative positions that form a spatially and temporally coherent trajectory within the respective cell,
performing (208) an inter-cell evaluation of a plurality of cell trajectories generated for a plurality of cells in the grid for the second time period (Δt2), to generate a grid trajectory of representative positions that form a spatially and temporally coherent trajectory within the plurality of cells, and
providing (210) trajectory data representing the grid trajectory.

2. The method of claim 1, wherein the summary data includes a representative time for time stamps of the incoming events, and wherein the spatially and temporally coherent trajectory comprises a sequence of representative positions that are mutually separated in representative time by less than a maximum time difference and in representative positions by less than a maximum distance.

3. The method of claim 2, wherein said performing (206) the intra-cell evaluation comprises: evaluating (206C) a respective representative position in the summary data for detection of a further representative position within a search area (40) that defines said maximum distance around the respective representative position, and including (206E) the further representative position in the cell trajectory of the respective representative position if the further representative position is detected within the search area (40).

4. The method of claim 3, wherein said including (206E) the further representative position is only performed if the respective representative position and the further representative position are separated (206D) in representative time by less than the maximum time difference.

5. The method of any one of claims 2-4, wherein each cell trajectory extends from a starting point to an end point, wherein said performing the inter-cell evaluation (208) comprises: evaluating (208B), in relation to the maximum time difference, a time difference between the end point of a first cell trajectory of a first cell in the grid and the starting point of a second cell trajectory of a second cell in the grid, wherein the second cell is spatially adjacent to the first cell; and evaluating (208C), in relation to the maximum distance, a distance between the representative position of the end point and the representative position of the starting point, and including (208F) the first cell trajectory and the second cell trajectory in the grid trajectory if the time difference is less than the maximum time difference (208D) and the distance is less than the maximum distance (208E).

6. The method of claim 5, wherein said inter-cell evaluation (208) is only performed when the representative position of the end point and the representative position of the starting point are within a distance limit to a border between the first and second cells.

7. The method of any preceding claim, wherein the summary data further comprises an extent parameter that represents a combined extent of the pixel positions that fall within the respective cell (32) during the first time period (Δt1), wherein each cell trajectory extends between terminal points, and wherein said method further comprises an adjustment procedure (207) comprising: obtaining (207A), from the summary data, the extent parameter for a terminal point of the respective cell trajectory, and adjusting (207B) the representative position of the terminal point based on the extent parameter.

8. The method of claim 7, wherein said adjusting (207B) the representative position comprises determining a shift vector in a coordinate system of the pixel array based on the least one extent parameter, wherein the representative position of the terminal point is adjusted by adding the shift vector to the representative position of the terminal point.

9. The method of any one claim 7 or 8, wherein the adjustment procedure extends the respective cell trajectory.

10. The method of any preceding claim, further comprising: operating (210A) a fitting algorithm on the representative positions of the grid trajectory, to generate curve definition data for a curve fitted to the representative positions of the grid trajectory, wherein the trajectory data comprises the curve definition data.

11. The method of any preceding claim, wherein the representative position corresponds to a center point of the pixel positions that fall within the respective cell during the first time period (Δt1).

12. The method of any preceding claim, wherein said generating (202-205) the summary data is performed only when a count of the pixel positions that fall within the respective cell (32) during the first time period (Δt1) exceeds a threshold value.

13. The method of any preceding claim, wherein the light in the scanning beam (21) is pulsed light, and wherein the pulsed light comprises a sequence of light pulses, and wherein the first time period (Δt1) comprises a predefined number of light pulses.

14. A computer-readable medium comprising computer instructions (1002A) which when executed by processor circuitry (1001) causes the processor circuitry (1001) to perform the method of any one of claims 1-13.

15. A system comprising:
at least one beam scanning device (20) configured to generate a scanning beam (21) of light to illuminate the object (1);
at least one event-based sensor (30, 40, 50) that comprises a pixel array (31, 41, 51) and is arranged to receive photons reflected or scattered by a region on the object (1) when illuminated by the scanning beam (21), wherein said at least one event-based sensor (30, 40, 50) is configured to generate an event for a pixel (32) in the pixel array (31, 41, 51) when a number of photons received by the pixel (32) exceeds a threshold, wherein said at least one event-based sensor (30, 40, 50) is configured to output events as a respective data stream, wherein each event in the respective data stream comprises an pixel position of the pixel (32) and a time stamp associated with the event; and
a processing sub-system (61), which is configured to perform the method of any one of claims 1-13.
